# EUROPEAN PATENT APPLICATION

(11) **EP 4 432 460 A1**
(43) Date of publication of application: **18.09.2024**
(21) Application number: 22893213.3
(22) Date of filing: 10.11.2022
(51) Int. Cl.: H01M 50/627, H01M 10/04

(54) **INJECTOR ENTRANCE STRUCTURE FOR INJECTING ELECTROLYTE INTO CYLINDRICAL SECONDARY BATTERY**

(30) Priority: 10.11.2021 KR 20210154334; 28.02.2022 KR 20220026195
(71) Applicant: LG Energy Solution, Ltd., Seoul 07335 (KR)
(72) Inventor: WON, Jin Hyeok, Seoul 07335 (KR); RYU, Duk Hyun, Seoul 07335 (KR); PARK, Kyeong Hoon, Seoul 07335 (KR)
(74) Representative: Goddar, Heinz J.
(86) International application number: PCT/KR2022/017612
(87) International publication number: WO 2023/085794

(57) **Abstract**

An injector inlet structure for injecting an electrolyte solution to a battery cell includes a closed-loop shaped outer ring configured to define an inner region; a momentum reduction portion disposed at a center portion of the inner region, spaced apart from the outer ring, to collide with electrolyte solution injected to the center portion of the inner region among the electrolyte solution injected through the inner region; and at least one connection member extending from the outer ring toward a center of the outer ring to be connected to the momentum reduction portion.

## Description

### [Technical Field]

This application is claims priority to Patent Application No. 10-2021-0154334 filed in the Republic of Korea on November 10, 2021 and Patent Application No. 10-2022-0026195 filed in the Republic of Korea on February 28, 2022, all of which are hereby expressly incorporated by reference into the present application.

The present disclosure relates to an injector inlet structure for injecting electrolyte into a cylindrical second battery and a method of injecting electrolyte using the same.

### [Background Art]

Recently, development is progressing in a direction of increasing the size of a secondary battery (i.e., a battery cell) in order to realize a high energy density of a battery pack and reduce manufacturing costs.

A conventional cylindrical secondary battery generally has a structure in which a tab connecting a jelly-roll and an external terminal with each other is welded to a foil of a jelly-roll. However, the conventional cylindrical secondary battery with such structure cannot but have a limited current path and a high self-resistance of the jelly-roll. In addition, a method of lowering the resistance by increasing the number of the tabs connecting the jelly-roll and the external terminal has been tried. However, there is a limit to lowering the resistance to a desired level and securing a sufficient current path by simply increasing the number of the tabs.

As the current applied to the secondary battery increases, a new jelly-roll structure is developing in order to lower the resistance. According to the new jelly-roll structure, non-coated portions exposed at axial ends of the jelly-roll are bent radially and flattened, and then connected to a current collecting plate by welding or the like, and the current collecting plate is connected to an external terminal.

In case of connecting both positive plate and negative plate disposed at axial ends of the jelly-roll to the external terminal through current collecting plates, current collecting plates may be welded to both ends of the jelly-roll, respectively, and the jelly-roll having the ends welded with the current collecting plates may be disposed inside a battery can. After that, the current collecting plates may be welded with the external terminal. At this time, a welding device inserted in a hollow portion of the jelly-roll may weld a bottom of the battery can with the lower current collecting plate of the j elly-roll. Further, to increase the impregnability of the electrolyte solution, the hollow portion formed at the center of the jelly-roll may be exposed without being covered with the current collecting plate.

In addition, as the size of the secondary battery increases unlike a conventional 18650 or 21700 size secondary battery, an insulator may not be used at a top of the secondary battery to maximize the electric capacity.

When the hollow portion of the jelly-roll is exposed with the current collecting plate and the insulator is not used on the top of the jelly-roll, a large amount of electrolyte could be directly injected into the hollow portion of the jelly-roll in the large-sized secondary battery so there arises a problem of deforming the periphery of the hollow portion, that is, a core portion of the j elly-roll.

### [Description of Disclosure]

### [Technical Problems]

Accordingly, one objective of the present disclosure is invented to solve the above-noted disadvantages of the prior art, and to provide an electrolyte injection nozzle structure that may prevent deformation of a core of a jelly-roll when electrolyte is injected into a battery can containing the j elly-roll.

Further, another objective of the present disclosure is to provide an electrolyte injection nozzle structure that may prevent an electrolyte solution from directly falling on a hollow portion of a jelly-roll and secure impregnation of the electrolyte solution of the secondary battery.

Still further, a further objective of the present disclosure is to provide a method of injecting an electrolyte into a j elly-roll type secondary battery.

Objects of the present invention are not limited to the above-described objects, and other objects and advantages of the present invention will be understood by the following description and will be more definitely understood through the embodiments of the present invention. It is also to be easily understood that the objectives and advantages of the present invention may be realized and attained by means and a combination thereof described in the appended claims.

### [Technical Solutions]

An injector inlet structure of the present disclosure invented to solve the above-noted disadvantages may be installed at an electrolyte solution outlet of an injector for injecting the electrolyte solution to a battery cell.

The injector inlet structure may be applied to a cylindrical secondary battery accommodating a j elly-roll type electrode assembly having a hollow portion formed in a winding axis.

The hollow portion of the electrode assembly may be exposed upward with respect to the cylindrical battery and a battery can.

The injector inlet structure may include a closed-loop outer ring configured to define an inner region; a momentum reduction portion disposed at a center portion of the inner region, spaced apart from the outer ring, to collide with a electrolyte solution injected through the center portion of the inner region; and at least one connection member extending from the outer ring toward a center of the outer ring to be connected to the momentum reduction portion.

The outer ring is circular-shaped.

The connection member may radially extend from the center of the outer ring.

One connection or two or more connection members may be provided.

A plurality of connection members may be provided to be arranged at equal intervals along a circumferential direction.

The connection member may have a shape extending in a straight line.

The connection member may have a shape extending in a curved line.

The momentum reduction portion may have a size that is big enough to cover a cross section of a hollow portion formed in an electrode assembly of a battery cell to which the injector inlet structure is applied.

A cross sectional area of the momentum reduction portion is greater than a cross sectional area of the hollow portion.

The momentum reduction portion is configured to completely close a center portion of the inner region.

The momentum reduction portion may include at least one through-hole having a cross sectional area that is smaller than a hollow portion of an electrode assembly of a battery cell in which the injector inlet structure is used.

The through-hole may be circular.

The through-hole may have a shape of a square including a rectangle and a diamond.

The through-hole may be a plurality of through-holes may be defined by a lattice member.

The lattice member may include at least one first lattice member extending in a first direction; and at least one second lattice member extending in a second direction crossing the first direction.

The first lattice member and the second lattice member may cross at right angles.

The lattice member may constitute not only the momentum reduction portion but also the connection member.

The lattice member is formed over an entire inner region of the outer ring near the momentum reduction portion as well as the momentum reduction portion.

The outer ring, the momentum reduction portion, and the connection member may be integrally formed with each other as one body.

A cover ring may be provided on an outer circumference of the outer ring and configured to be connected with the outer ring while surrounding the outer ring.

The outer ring, the momentum reduction portion, the connection member, and the cover ring may include a polymer material that does not dissolve in the electrolyte solution and does not chemically react with the electrolyte solution.

The cover ring may be softer than the outer ring.

### [Advantageous Effects]

According to the present disclosure, a large amount of an electrolyte solution may be rapidly injected and the deformation of the core portion of the electrode assembly due to the momentum of the electrolyte solution may be prevented.

According to the present disclosure, it is possible to prevent the electrolyte solution from directly falling into the hollow part of the jelly-roll, while ensuring the impregnation of the electrolyte in the secondary battery.

In addition to the above-described effects, specific effects of the present invention will be described together with the following detailed description for implementing the present invention.

### [Brief Description of Drawings]

FIG. 1 is a sectional view showing an internal structure of a cylindrical secondary battery to which an electrolyte solution injector inlet structure of the present disclosure may be applied;
FIG. 2 is a perspective view of a first current collecting plate shown in FIG. 1;
FIG. 3 is a perspective view of an injector inlet structure according to a first embodiment of the present disclosure;
FIG. 4 is a plane view of the injector inlet structure shown in FIG. 3; and
FIGS. 5 to 10 are plane views of an injector inlet structure according to second to sixth implementations of the present disclosure.

### [Description of Reference Numerals]

1: Cylindrical secondary battery 10: Electrode assembly 11: First electrode tab 12: Second electrode tab H1: Winding hole (Hollow portion) 20: Battery can 21: Beading portion 22: Crimping portion 30: Current collecting plate (First current collecting plate) H2: Current collecting plate hole 31: Loop-shaped portion (Center portion) 32: Tab coupling portion H3: Injection hole 33: Can coupling portion 33a: Contact portion 33b: Connection portion 40: Can cover 41: Vent portion G1: Sealing gasket 50: Cell terminal G2: Insulation gasket T1: First electrode terminal T2: Second electrode terminal P: Current collecting plate (Second current collecting plate) S: Insulator W: Welding portion 70: Injector inlet structure 71: Outer ring 72: Inner region 73: Momentum reduction portion 74: Through-hole 75: Lattice member 751: First lattice member 752: Second lattice member 76: Connection member 77: Cover ring X: Longitudinal direction of Electrode plate (Circumferential direction) Y: Width direction of Electrode plate (Axial direction) Z: Radial direction

### [DESCRIPTION OF SPECIFIC EMBODIMENTS]

The above objects, features and advantages will be described later in detail with reference to the accompanying drawings, and accordingly, those skilled in the art to which the present invention belongs will be able to easily implement the technical idea of the present invention. In describing the present invention, if it is determined that the detailed description of the known technology related to the present invention may unnecessarily obscure the subject matter of the present invention, the detailed description will be omitted. Hereinafter, preferred embodiments according to the present invention will be described in detail with reference to the accompanying drawings. In the drawings, the same reference numerals are used to indicate the same or similar components.

Although "first", "second", and the like may be used to describe various components, these components are not limited by these terms. These terms are only used to distinguish one component from another component, and unless otherwise stated, the first component may be the second component, of course.

Throughout the specification, unless otherwise stated, each component may be singular or plural.

Hereinafter, the arrangement of an arbitrary component on the "upper portion (or lower portion)" or "upper (or lower)" of a component means that an arbitrary component is placed in contact with the upper (or lower) surface of the component. In addition, it may mean that other components may be interposed between the component and any component disposed on (or under) the component.

In addition, when a component is described as "linked", "coupled" or "connected" to another component, the components may be directly connected or connected to each other, but other components may be "interposed" between each component. ", or each component may be "linked", "coupled" or "connected" through other components.

Throughout the specification, unless otherwise stated, each component may be singular or plural.

Singular expressions used herein include plural expressions unless the context clearly dictates otherwise. In this application, terms such as "consisting of" or "comprising" should not be construed as necessarily including all of the various components or steps described in the specification. It should be construed that it may not include some of the components or some of the steps. Or may further include additional components or steps.

Throughout the specification, when it says "A and/or B", it means A, B or A and B, unless otherwise specified, and when it says "C to D", it means C or more and D or less, unless otherwise specified.

For description sake, a longitudinal direction of a winding axis of an electrode assembly winding in the form of a jelly-roll is referred to as an axial direction Y. A direction around the winding axis is referred to as a circumferential direction X. A direction closer to or away from the winding axis is referred to as a radial direction Z. Among those directions, the direction closer to the winding direction is referred to a centripetal direction and the direction getting away from the winding direction is referred to as a centrifugal direction.

Hereinafter, preferred embodiments of the present disclosure will be described referring to the accompanying drawings.

### [Cylindrical battery]

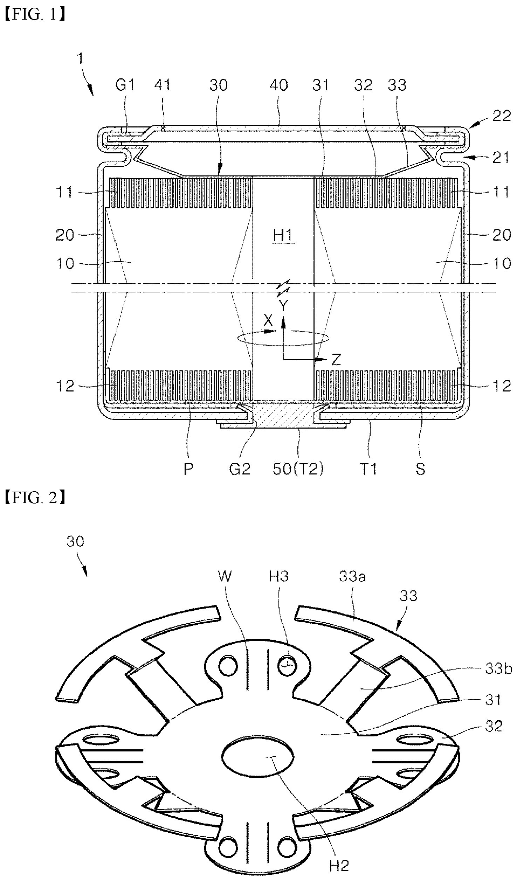

Hereinafter, referring to FIGS. 1 and 2, a cylindrical secondary battery which is suitable for applying the injector inlet structure according to an embodiment will be described. However, the injector inlet structure of the present disclosure is not necessarily applied only to the cylindrical secondary battery structure which will be described below.

Referring to FIG. 1, a cylindrical secondary battery 1 configured to inject an electrolyte solution by applying the injector inlet structure according to an embodiment may include an electrode assembly 10, a battery can 20, a current collecting plate (a first current collecting plate) 30, a can cover 40 and a cell terminal 50. The cylindrical secondary battery 1 may further include a sealing gasket G1 and /or an insulation gasket G2 and/or a current collecting plate (a second current collecting plate) P and/or an insulator S.

The electrode assembly 10 may include a first electrode tab 11 and a second electrode tab 12.

More specifically, a layered body may be fabricated by sequentially laminating a first electrode, a separation film, a second electrode and a separation film at least one time, and the electrode assembly 10 may be then fabricated by winding the layered body in X-axis direction about Y-axis. In other words, the electrode assembly 10 applied to the present disclosure may be a jelly-roll type electrode assembly. In this instance, an additional separation film may be provided on an outer circumferential surface of the electrode assembly 10 to insulate it from the battery can 20.

The first electrode may include a first electrode current collector and a first electrode active material coated on one surface or both surfaces of the first electrode current collector. A non-coated portion where the first electrode active material is not coated may be provided one width-direction end of the first electrode current collector (i.e., a direction parallel to a height direction of the cylindrical secondary battery 1 shown in FIG. 1). The non-coated portion may function as the first electrode tab 11. The first electrode tab 11 may be provided on an upper side of the electrode assembly 10 accommodated inside the battery can 20 in a height direction of the electrode assembly 10, which is parallel to the height direction of the cylindrical secondary battery 1 shown in FIG. 1. The first electrode tab 11 may be a negative tab, for example.

The second electrode may include a second current collector and a second active material coated on one surface or both surfaces of the second electrode current collector. A non-coated portion where the second electrode active material is not coated may be provided the other width-direction end of the second electrode current collector (i.e., a direction parallel to the height direction of the cylindrical secondary battery 1 shown in FIG. 1). The non-coated portion may function as the second electrode tab 12. The second electrode tab 12 may be provided on a lower side of the electrode assembly 10 accommodated inside the battery can 20 in a height direction of the electrode assembly 10, which is parallel to the height direction of the cylindrical secondary battery 1 shown in FIG. 1. The second electrode tab 12 may be a positive tab, for example.

According to the present disclosure, active materials well-known in the art may be used as the positive active material coated on the positive electrode plate and the negative active material coated on the negative electrode plate, without limitation.

In one example, the positive electrode active material may include an alkali metal compound expressed by a general formula A[AₓM_{y}]O_{2+z} (A includes at least one element among Li, Na and K; M includes at least one element selected from is Ni, Co, Mn, Ca, Mg, Al, Ti, Si, Fe, Mo, V, Zr, Zn, Cu, Al, Mo, Sc, Zr, Ru, and Cr; x≥0, 1≤x+y≤2, -0.1≤z≤2; and the stoichiometric modulus x, y and z are selected so that the compound maintains electrical neutrality).

In another example, the positive electrode active material may be an alkali metal compound xLiM¹O₂-(1-x)Li₂M²O₃ disclosed in U.S. Pat. Nos. 6,677,082, 6,680,143, et al., wherein M' includes at least one element having an average oxidation state 3; M² includes at least one element having an average oxidation state 4; and 0≤x≤1).

In still another example, the positive electrode active material may be lithium metal phosphate expressed by a general formula LiₐM¹ₓFe₁₋ₓM²_{y}P_{1-y}M³_{z}O_{4-z} (M¹ includes at least one element selected from the Ti, Si, Mn, Co, Fe, V, Cr, Mo, Ni, Nd, Al, Mg and Al; M² includes at least one element selected from Ti, Si, Mn, Co, Fe, V, Cr, Mo, Ni, Nd, Al, Mg, Al, As, Sb, Si, Ge, V and S; M³ includes a halogen element optionally including F; 0<a≤2, 0≤x≤1, 0≤y≤1, 0≤z<1; the stoichiometric coefficient a, x, y and z are selected so that the compound maintains electrical neutrality), or Li₃M₂(PO₄)₃ (M includes at least one element selected from Ti, Si, Mn, Fe, Co, V, Cr, Mo, Ni, Al, Mg and Al).

Preferably, the positive electrode active material may include primary particles and/or secondary particles in which the primary particles are aggregated.

In one example, the negative electrode active material may employ carbon material, lithium metal or lithium metal compound, silicon or silicon compound, tin or tin compound, or the like. Metal oxides such as TiO₂ and SnO₂ with a potential of less than 2V may also be used as the negative electrode active material. As the carbon material, both low-crystalline carbon, high-crystalline carbon or the like may be used.

The separator may employ a porous polymer film, for example, a porous polymer film made of a polyolefin-based polymer such as ethylene homopolymer, propylene homopolymer, ethylene/butene copolymer, ethylene/hexene copolymer, ethylene/methacrylate copolymer, or the like, or laminates thereof. As another example, the separator may employ a common porous nonwoven fabric, for example, a nonwoven fabric made of high melting point glass fiber, polyethylene terephthalate fiber, or the like.

A coating layer of inorganic particles may be included in at least one surface of the separator. It is also possible that the separator itself is made of a coating layer of inorganic particles. Particles in the coating layer may be coupled with a binder so that an interstitial volume exists between adjacent particles.

The inorganic particles may be made of an inorganic material having a dielectric constant of 5 or more. As a non-limiting example, the inorganic particles may include at least one material selected from the group consisting of Pb(Zr,Ti)O₃ (PZT), Pb₁₋ₓLaₓZr_{1-y}Ti_{y}O₃ (PLZT), PB(Mg₃Nb_{2/3})O₃-PbTiO₃ (PMN-PT), BaTiO₃, hafnia (HfO₂), SrTiO₃, TiO₂, Al₂O₃, ZrO₂, SnO₂, CeO₂, MgO, CaO, ZnO and Y₂O₃.

The electrolyte may be a salt having a structure of A⁺B⁻. Here, A⁺ includes an alkali metal cation such as Li⁺, Na⁺, or K⁺ or a combination thereof. In addition, B⁻ includes at least one anion selected from the group consisting of F⁻, Cl⁻, Br⁻, I⁻, N0₃⁻, N(CN)₂⁻, BF₄⁻, C10₄⁻, AlO₄⁻, AlCl₄⁻, PF₆⁻, SbF₆⁻, AsF₆⁻, BF₂C₂O₄⁻, BC₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (CF₃SO₂) ₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻.

The electrolyte may also be used in a state of being dissolved in an organic solvent. As the organic solvent, propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), γ-butyrolactone, or a mixture thereof may be used.

The current collecting plates 30 and P may be electrically connected to the first electrode tab 11 and the second electrode tab 12, respectively. The first electrode tab 11 and the second electrode tab 12 may be coupled to the first current collecting plate 30 and the second current collecting plate P respectively by welding and the like, in a state of not bent in a radial direction as shown in FIG. 1 or bent in the radial direction as not shown in the drawing.

The battery can 20 may be a substantially cylindrical container having an opening formed on one side thereof, and may be made of a conductive metal material. For example, the battery can 20 may be made of a steel or aluminum material but the present disclosure is not limited thereto. A lateral surface of the battery can 20 and a lower surface disposed in opposite to the opening (a lower surface with respect to FIG. 1) may be integrally formed with each other. In other words, a height-direction upper end of the battery can 20 may be open and a lower end thereof may be closed. For example, the battery can 51 may form lateral walls and a bottom surface by drawing sheet metal with a press.

The lower surface of the battery can 20 may have a substantially flat shape.

A hole may be formed at the center of the lower surface of the battery can 20. The cell terminal 50 may be coupled to the battery can 20 while disposing the insulation gasket G2 therebetween. Accordingly, the battery can 20 may constitute the first electrode terminal T1 and the cell terminal 50 may constitute the second electrode terminal T2.

The battery can 20 may accommodate the electrode assembly 10, to which the current collectors 30 and P are coupled, through the opening formed at one side of the height-direction (the upper side with respect to FIG. 1). The battery can 20 may also accommodate the electrolyte together through the opening.

In a state where the electrode assembly 10 is accommodated inside the battery can 20, the second current collecting plate P may be coupled to the cell terminal 50 by welding or the like to be electrically connected. In order to prevent the second current collecting plate P of the electrode assembly 10 from contacting the bottom of the battery can 20 constituting the first electrode terminal T1, the insulator S may be disposed between the bottom of the battery can 20 and the second current collecting plate P.

The battery can 20 may include a beading portion 21 formed at an upper end. The beading portion 21 may be processed while the electrode assembly 10 is accommodated inside the battery can 20.

The beading portion 21 may formed by inserting an outer circumference of the battery can 20 by a predetermined depth. An inner diameter of the battery can 20 inside a region in which the beading portion 21 is formed may be smaller than a diameter of the electrode assembly 10.

An edge of the first current collecting plate 30 connected to the first electrode tab 11 of the electrode assembly 10 may be disposed on the beading portion 21.

Referring to FIG. 2, the first current collecting plate 30 may include a loop-shaped portion 31, at least one tab coupling portion 32 protruding radially outward from the loop-shaped portion 31 to be coupled to the first electrode tab 11, and at least one can coupling portion 33 extending radially outward from the loop-shaped portion to an inner surface of the battery can 20.

The number of the tab coupling portion 32 and can coupling portion 33 may be one or two or more. Preferably, three to six tab coupling portions 32 and can coupling portions 33 may be arranged at equal intervals along the circumferential direction.

The loop-shaped portion 31 and the at least one tab coupling portion 32 may be disposed above the electrode assembly 10 and below the beading portion formed in the battery can 20. They may be in close contact with the first electrode tab 11 provided on the electrode assembly 10.

The loop-shaped portion 31 may be provided at the center of the first current collecting plate 30 so that it may be referred to as the center portion. The center portion 31 may include a current collecting plate hole H2 formed at a position corresponding to a winding hole H1 formed at the center of the electrode assembly 10. Accordingly, in a state where the first current collecting plate 30 is coupled to the first electrode tab 11, a hollow portion, that is, a winding hole H1 of the electrode assembly 10 may be exposed upward through the current collecting plate hole H2. The winding hole H1 and the current collecting plate hole H2, which are in communication with each other, may function as a path for inserting a welding rod or a path for irradiating a laser for welding between the cell terminal 50 and the second current collecting plate P, and as a path through which the electrolyte is introduced.

The at least one tab coupling portion 32 may be welded with the first electrode tab 11. To secure impregnability of the electrolyte, an injection hole H3 may be formed in the tab coupling portion 32.

The at least one can coupling portion 33 may extend from one end of the center portion 31 toward a lateral wall of the battery can 20. The can coupling portion 33 may be coupled to the beading portion 21 among inner surfaces of the battery can 20. As shown in FIG. 1, an upper surface of the beading portion 21 may extend along a direction substantially parallel to a lower surface of the battery can 20, that is, substantially perpendicular to the lateral surface of the battery can 20, and the can coupling portion 33 may also extend along the same direction, so that the can coupling portion 33 may contact on the beading portion 21.

Referring to FIG. 2, the can coupling portion 33 may include a contact portion 33a coupled to the beading portion 21 of the battery can 20, and a connection portion 33b connecting the center portion 31 and the contact portion 33a with each other.

The connection portion 33b may include at least one bend portion B at which the extension direction of the connection portion 33b is changed between the center portion 31 and the contact portion 33a, to be contractable and extendible within a predetermined range.

While the electrode assembly 10 is accommodated inside the battery can 20 and the current collecting plates 30 and P are connected to the electrode terminals T1 and T2, respectively, the electrolyte may be injected into the battery can 20 through the opening formed on the upper side of the battery can 20. According to an embodiment, the hollow portion of the electrode assembly 10 may be exposed upward through the current collecting plate hole H2 of the first current collecting plate 30. Accordingly, when the electrolyte solution is injected, the possibility of impact and deformation occurring in the core portion of the electrode assembly 10 due to a considerable momentum of falling electrolyte solution could not be rolled out.

The present disclosure may provide the electrolyte solution injector inlet structure 70 capable of reducing the momentum of the electrolyte injected into the hollow portion of the electrode assembly 10. The electrolyte injector inlet structure 70 may have an edge, which is disposed on the beading portion 21 and fitted to an inner surface of the lateral wall of the battery can 20, so that the electrolyte solution may be injected in this state. The structure of the injector inlet structure 70 will be described below.

The beading portion 21 may provide a support surface on which the can cover 40 is seated. The contact portion 33a of the current collecting plate 30 and an edge of the can cover 40 may be disposed on an upper surface of the beading portion 21.

The battery can 20 may include a crimping portion 22 formed in an area higher than the beading portion 21.

The crimping portion 22 may be formed at upper side of the beading portion 21. The crimping portion 21 may have a shape extending and bending to surround an edge of the can cover 40 disposed on the beading portion 21. The can cover 40 may be fixedly disposed on the beading portion 21 by the shape of the crimping portion 22.

The can cover 40 may be configured to cover the opening formed at one side of the battery can 20. The can cover 40 may be secured by the crimping portion 22 formed at the upper end of the battery can 20. In this instance, a sealing gasket G1 may be disposed between the battery can 20 and the can cover 40 to improve the securing force and the sealing of the battery can 20. Since the two electrode terminals T1 and T2 of the cylindrical secondary battery described in the embodiment are disposed in a lower area, the can cover 40 may not necessarily function as the path of the currents. So, it is allowed to dispose the sealing gasket G1 between the can cover 40 and the battery can 20 which are coupled to each other.

The can cover 40 may further include a bending groove 41 for venting the electrolyte.

Preferably, the cylindrical battery cell may be a cylindrical battery cell having a form factor ratio that is greater than about 0.4 (a value obtained by dividing a diameter of a cylindrical battery cell by a height, that is, a radio of a diameter Φ to a height H).

Here, the form factor means a value representing the diameter and height of a cylindrical battery cell. Cylindrical battery cells according to an embodiment of the present invention may be, for example, 46110 cells, 48750 cells, 48110 cells, 48800 cells, or 46800 cells. In the numerical value representing the form factor, the first two numbers indicate the diameter of the cell, the next two numbers indicate the height of the cell, and the last number 0 indicates that the cross section of the cell is circular.

A battery cell according to an embodiment of the present invention may be a cylindrical battery cell having a substantially cylindrical shape, a diameter of about 46 mm, a height of about 110 mm, and a form factor ratio of 0.418.

A battery cell according to another embodiment may be a cylindrical battery cell having a diameter of about 48 mm, a height of about 75 mm, and a form factor ratio of 0.640.

A battery cell according to another embodiment may be a substantially cylindrical battery cell having a diameter of about 48 mm, a height of about 110 mm, and a form factor ratio of 0.418.

A battery cell according to another embodiment may be a substantially cylindrical battery cell having a diameter of about 48 mm, a height of about 80 mm, and a form factor ratio of 0.600.

A battery cell according to another embodiment may be a cylindrical battery cell having a substantially cylindrical shape, a diameter of about 46 mm, a height of about 80 mm, and a form factor ratio of 0.575.

Conventionally, battery cells having a form factor ratio of approximately 0.4 or less have been used. That is, conventionally, for example, 18650 cells, 21700 cells and the like have been used. For an 18650 cell, its diameter is approximately 18mm, its height is approximately 65mm, and the form factor ratio is 0.277. For a 21700 cell, its diameter is approximately 21 mm, its height is approximately 70 mm, and the form factor ratio is 0.300.

### [Electrolyte injector inlet structure]

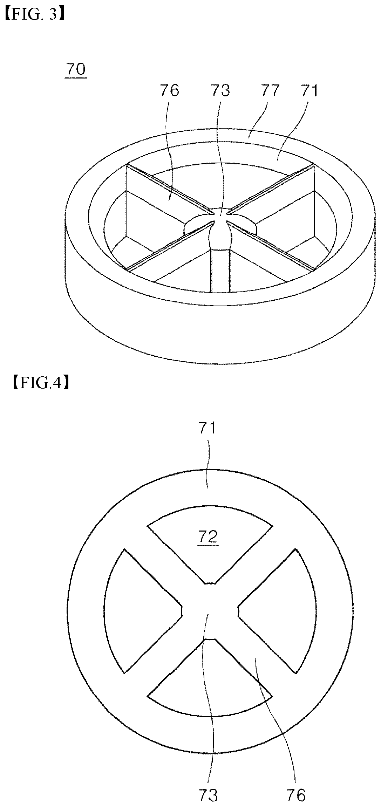

Hereinafter, referring to FIGS. 3 to 10, an electrolyte injector inlet structure according to an embodiment will be described. The electrolyte injector inlet structure 70 may be installed at an injector which injects electrolyte into the battery cell. The electrolyte may be injected into the battery cell through the injector inlet structure 70.

The injector inlet structure may include an outer ring 71 having a loop shape for defining an inner area. The outer ring 71 may be circular-shaped, for example. The electrolyte injected by the injector may be supplied to the battery cell through an inner region 72 of the outer ring 71.

The cross section of the inner region 72 of the outer ring 71 may be smaller than that of the upper opening of the battery cell.

A momentum reduction portion 73 may be provided at the center of the inner region 72. The momentum reduction portion 73 may be disposed at a position covering the winding hole H1 of the secondary battery, that is, the hollow portion, in a state the injector inlet structure 70 is disposed on the battery can 20.

The momentum reduction portion 73 may be configured to hinder or block the flow of the electrolyte solution injected into the center of the inner region 72 among the electrolyte solution supplied through the inner region 72. Then, electrolyte passing through the center of the inner region 72 may not fall and be supplied directly into the winding hole H1, that is, the hollow portion disposed below the momentum reduction portion 73 but bypass and be supplied a through the space between the momentum reduction portion 73 and the outer ring 71. In other words, the momentum reduction portion 73 may reduce the momentum and kinetic energy of the electrolyte flowing at the center of the inner region 72.

The first current collecting plate 30 fixed to the upper portion of the electrode assembly 10 may cover most of the other portion except the hollow portion of the electrode assembly 10, and the first electrode tabs 11 are bended in a radial direction and are overlapped to each other. Accordingly, even if the electrolyte directly falls and is supplied to the corresponding region, there is not concern of deformation or damage to the electrode assembly 10.

The injector inlet structure 70 may include one or more than one connection member 76 extending toward the center of the outer ring 71 from the outer ring 71 to be connected to the momentum reduction portion 73 to support the momentum reduction portion 73.

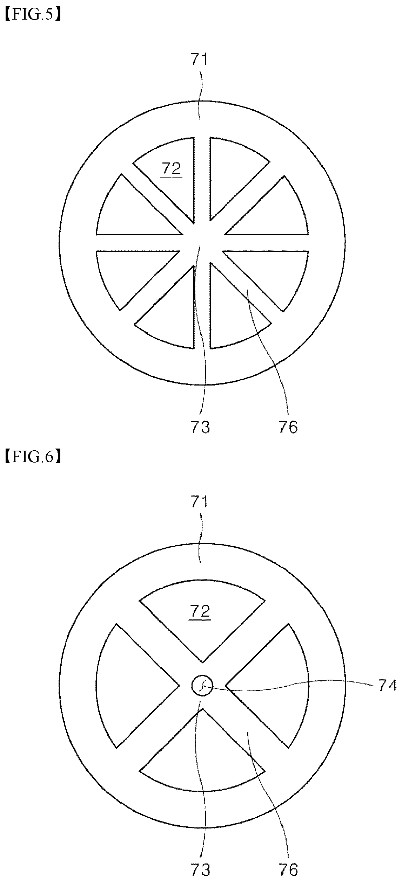

The connection member 76 may extend in a radial direction from the center of the outer ring 71. FIG. 3, FIG. 4, FIG. 6, FIG. 7 and FIG. 8 show a structure in which four connection members 76 are arranged at intervals of 90 degrees. FIG. 5 shows a structure in which eight connection members 76 are disposed at intervals of 45 degrees. The number of the connection members 76 is not limited to the embodiments shown in the drawings.

Like the embodiment shown FIGs. 3 to 5, the momentum reduction portion 73 may be configured to completely block the center of the inner region. In this structure, the electrolyte may be supplied into the battery can 20 with bypassing the center of the inner region while passing through the injector inlet structure 70. Due to this structure, damage to the hollow portion of the electrode assembly 10 may be completely prevented.

However, the momentum reduction portion 73 may not necessarily have to be completely blocked. The momentum reduction portion 73 may have at least one through-hole 75 to lower the momentum or kinetic energy of the electrolyte solution supplied to the hollow portion of the electrode assembly 10.

At this time, one through-hole 74 or a plurality of through-holes 74 may be provided. The size of the through-hole may be smaller than that of the hollow portion H1 of the electrode assembly 10. FIG. 6 shows a structure in which a circular through-hole smaller than the hollow portion of the electrode assembly 10 is formed in the right center of the momentum reduction portion 73. Accordingly, the electrolyte solution falling after passing through the through-hole 74 of the momentum reduction portion 73 may be supplied to the hollow portion H1 of the electrode assembly 10, with a remarkably reduced falling speed due to viscosity with the inner circumferential surface of the through-hole 74.

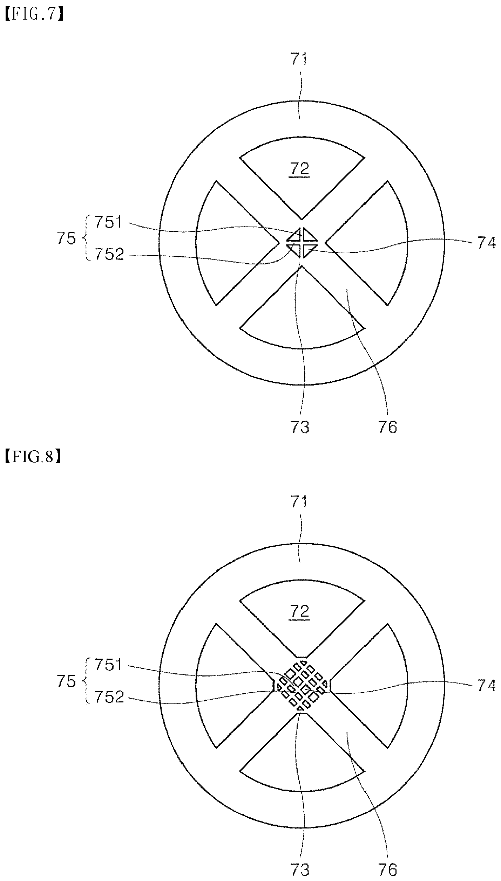

Referring to FIGS. 7 and 8, a plurality of through-holes 74 provided in the momentum reduction portion 73 may be provided and the plurality of through-holes 74 may be defined by a lattice member 75. The connection member 76 may secure a predetermined thickness to support the momentum reduction portion 73 having much load for blocking the flow of the electrolyte solution. However, the lattice member 75 may have a predetermined thickness that is smaller than the connection member 76 to secure a wider contact area with the electrolyte solution flowing through the through-hole 74.

Referring to FIG. 7, the lattice member 75 may include a first lattice member 751 extending in a first direction and one second lattice member 752 extending in a second direction crossing the first direction. Accordingly, four through-holes 74 may be defined by the lattice member 75. FIG. 7 shows a structure in which the first lattice member 751 and the second lattice member 752 cross at right angles, but the cross pattern is not necessarily limited thereto. For example, a third lattice member 75 extending in a third direction crossing the first and second directions may be further provided and they may cross each other at intervals of 60 degrees.

Referring to FIG. 8, the lattice member 75 may include a plurality of first lattice members 751 extending in a first direction and a plurality of lattice members 752 extending in a second direction. Accordingly, a plurality of through-holes 74 may be defined by the plurality of lattice members 75.

The cross section of each through-hole 75 defined by the lattice member 75 may be smaller than that of the hollow portion of the electrode assembly 10. When the momentum reduction portion 73 includes such the through-holes 74, the electrolyte solution supplied through the center portion of the injector inlet structure 70 may pass through the momentum reduction portion 73 but may flow with a remarkably reduced momentum to be supplied to the hollow portion of the electrode assembly 10, thereby preventing damage to the core portion of the electrode assembly 10.

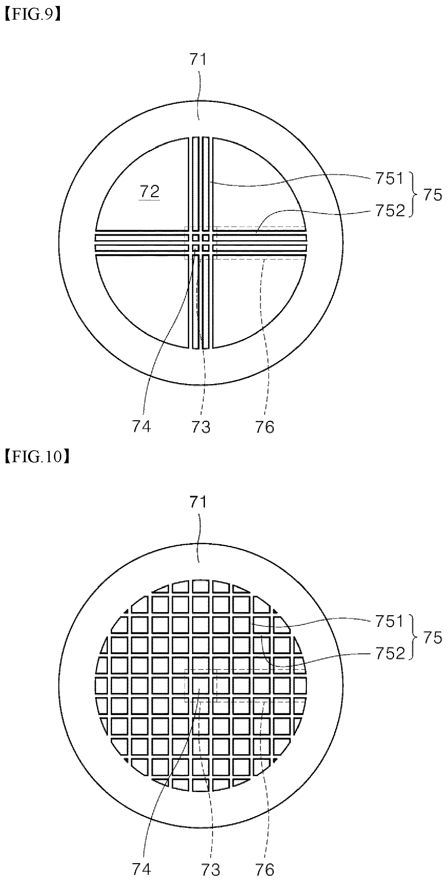

As shown in FIG. 9, the lattice member 75 may constitute the momentum reduction portion 73 and also constitute the connection member 76. Referring to FIG. 9, the momentum reduction portion 73 may be defined as the part defining the through-hole 74 having the smaller cross section than the hollow portion of the electrode assembly 10, while the first lattice member 751 and the second lattice member 752 cross each other. The connection member 76 may be defined as a portion connecting the momentum reduction portion 73 and the outer ring 71 with each other.

Moreover, as shown in FIG. 10, the lattice member 75 may be formed over the entire inner region of the outer ring 71 around the momentum reduction portion 73 as well as the momentum reduction portion 73.

Since the lattice member 75 is disposed over the entire inner region, the through-hole 74 may be also disposed over the entire inner region. In this instance, even if a large amount of the electrolyte solution is injected at once due to the supply of the electrolyte solution to a secondary battery with a larger specification than the conventional one, the electrolyte may pass through the through-hole 74 disposed over the entire inner region and be supplied in a state where the momentum of the electrolyte solution is greatly reduced by the viscosity resistance between the electrolyte and the inner wall of the through-hole 74. Accordingly, the damage to the electrode assembly may be minimized.

The outer ring 71, the momentum reduction portion 73 and the connection member 76 described above may be integrally formed as one body by injection molding or the like.

The momentum reduction portion 73 and the connection member 76 may have a rigidity that can sufficiently withstand the amount of impact applied while colliding with the flowing electrolyte. Accordingly, the outer ring 71 supporting them can be integrally formed with the connection member 76 and the momentum reduction portion 73 by using the same material. Such the material may be a harder material than a cover ring 77 which will be described below.

Meanwhile, as shown in FIG. 3, a cover ring 77 may be further provided in an outer circumference of the outer ring 71 to surround the outer ring 71, and coupled to the outer ring 71.

The cover ring 77 may be made of a different material from the outer ring 71.

The cover ring 77 may be configured to be fitted to the battery can 20 and made of a more flexible material than the outer ring 71. In other words, the cover ring 77 may be made of a softer material than the outer ring 71.

The outer ring, 71, the momentum reduction portion 73, the connection member 76, and the cover ring 77 may include a polymer material that does not dissolve in the electrolyte solution and does not chemically react with the electrolyte solution.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and spirit of the present invention. Further, although the operating effects according to the configuration of the present invention are not explicitly described while describing an embodiment of the present invention, it should be appreciated that predictable effects are also to be recognized by the configuration.

## Claims

1. An injector inlet structure for injecting an electrolyte solution to a battery cell comprising:
a closed-loop outer ring configured to define an inner region;
a momentum reduction portion disposed at a center portion of the inner region, spaced apart from the outer ring, to collide with electrolyte solution injected to the center portion of the inner region through the inner region; and
at least one connection member extending from the outer ring toward a center of the outer ring to be connected to the momentum reduction portion.

2. The injector inlet structure of claim 1, wherein the connection member radially extends from the center of the outer ring.

3. The injector inlet structure of claim 1, wherein the momentum reduction portion completely blocks the center portion of the inner region.

4. The injector inlet structure of claim 1, wherein the momentum reduction portion comprises at least one through-hole having a cross sectional area that is smaller than a hollow portion of an electrode assembly of a battery cell in which the injector inlet structure is used.

5. The injector inlet structure of claim 4, wherein the through-hole is provided in plural, and the plurality of through-holes are defined by a lattice member.

6. The injector inlet structure of claim 5, wherein the lattice member comprises
at least one first lattice member extending in a first direction; and
at least one second lattice member extending in a second direction crossing the first direction.

7. The injector inlet structure of claim 6, wherein the lattice member comprises the momentum reduction portion 73 and the connection member.

8. The injector inlet structure of claim 6, wherein the lattice member is formed over an entire inner region of the outer ring near the momentum reduction portion as well as the momentum reduction portion.

9. The injector inlet structure of claim 1, wherein the outer ring, the momentum reduction portion, and the connection member are integrally formed with each other as one body.

10. The injector inlet structure of claim 1, wherein a cover ring is provided on an outer circumference of the outer ring and configured to be connected with the outer ring while surrounding the outer ring.

11. The injector inlet structure of claim 1, wherein the outer ring, the momentum reduction portion, the connection member, and the cover ring comprise a polymer material that does not dissolve in the electrolyte solution and does not chemically react with the electrolyte solution, and
wherein the cover ring is softer than the outer ring.
